# EUROPEAN PATENT APPLICATION

(11) **EP 4 478 483 A2**
(43) Date of publication of application: **18.12.2024**
(21) Application number: 24179429.6
(22) Date of filing: 31.05.2024
(51) Int. Cl.: H01M 10/48, H01M 50/519, H01M 50/569, H01M 10/42

(54) **RECHARGEABLE BATTERY MODULE**

(30) Priority: 13.06.2023 KR 20230075787
(71) Applicant: Samsung SDI Co., Ltd., Yongin-si, Gyeonggi-do 17084 (KR)
(72) Inventor: KWON, Young-Hwan, 17084 Yongin-si (KR); YUN, Chuljung, 17084 Yongin-si (KR)
(74) Representative: Marks & Clerk LLP

(57) **Abstract**

A rechargeable battery module is provided. The rechargeable battery module may include: a bus bar holder configured to cover a plurality of battery cells; a bus bar positioned in the bus bar holder, the bus bar configured to output a voltage of the plurality of battery cells, and the bus bar having a first surface, a second surface, and a groove extending into the bus bar in a thickness direction; a flexible printed circuit attached to one of the first and second surfaces of the bus bar, the flexible printed circuit comprising a first surface and a second surface, and the flexible printed circuit being configured to send a signal indicating a temperature of the bus bar; a temperature sensor mounted on the first surface of the flexible printed circuit, inserted into the groove, and configured to detect the temperature of the bus bar; a heat transfer material between a surface of the bus bar, on a side of the groove, and the temperature sensor and configured to transfer heat from the surface of the bus bar, on the side of the groove, to the temperature sensor; and a heat transfer member attached to the second surface of the flexible printed circuit and configured to transfer heat from the bus bar to the temperature sensor.

## Description

### BACKGROUND

### (a) Field

The present disclosure relates to a rechargeable battery module, and more particularly, to a rechargeable battery module connecting a sensing unit of a flexible printed circuit (FPC) to a bus bar.

### (b) Description of the Related Art

A rechargeable battery can be repeatedly charged and discharged, unlike a primary battery. Small-capacity rechargeable batteries are used in portable electronic devices such as mobile phones, notebook computers, and camcorders.

Large-capacity and high-density rechargeable batteries are used to provide power for operating the motors of hybrid vehicles and electric vehicles, or energy storage. Rechargeable batteries may be implemented by forming a rechargeable battery module including a plurality of battery cells connected in series and/or parallel to operate a motor of, e.g., a hybrid vehicle requiring relatively high energy density.

For example, in a rechargeable battery module, a temperature sensor for sensing a temperature of a bus bar is mounted on a flexible printed circuit (FPC), and the temperature sensor is attached to the bus bar. Sensing a temperature rise of the bus bar is required to be accurate within a limited deviation. As a result, current structures for attaching a temperature sensor to a bus bar require a large available space.

However, since available spaces above and below the bus bar in a rechargeable battery module are narrow, it is difficult to fit commercialized temperature sensors in those spaces. Accordingly, a structure for attaching a temperature sensor to a bus bar, which fits in a narrow space, is required.

### SUMMARY

The present disclosure provides a rechargeable battery module, in which a temperature sensor is mounted on a flexible printed circuit (FPC) for sensing a temperature of a bus bar, which fits in a narrow space.

An embodiment provides a rechargeable battery module including: a bus bar holder configured to cover a plurality of battery cells; a bus bar positioned in the bus bar holder, configured to output a voltage of the plurality of battery cells, and having a first surface, a second surface, and a groove extending into the bus bar in a thickness direction; a flexible printed circuit attached to one of the first and second surfaces of the bus bar, the flexible printed circuit comprising a first surface and a second surface, and the flexible printed circuit being configured to send a signal indicating a temperature of the bus bar; a temperature sensor mounted on the first surface of the flexible printed circuit, inserted into the groove, and configured to detect the temperature of the bus bar; a heat transfer material between a surface of the bus bar, on a side of the groove, and the temperature sensor and configured to transfer heat from the surface of the bus bar, on the side of the groove, to the temperature sensor; and a heat transfer member attached to the second surface of the flexible printed circuit and configured to transfer heat from the bus bar to the temperature sensor.

The groove may be located entirely within a width, in a width direction, of the bus bar.

The heat transfer material may be thermal glue.

The heat transfer member may comprise an aluminium plate.

The heat transfer member may have a thickness of 0.3 mm to 0.5 mm in the thickness direction.

The heat transfer member may have an area that is equal to an area of a portion of the flexible printed circuit on which the temperature sensor is mounted.

The heat transfer member may have an area that is larger than an area of a portion of the flexible printed circuit on which the temperature sensor is mounted, such that the heat transfer member is in direct contact with a surface of the bus bar.

The flexible printed circuit and the heat transfer member may be sequentially positioned on the first surface of the bus bar, and the heat transfer material may be filled in the groove from a side of the second surface of the bus bar.

The flexible printed circuit and the heat transfer member may be sequentially positioned on the second surface of the bus bar, and the heat transfer material may be filled in the groove from a side of the first surface of the bus bar.

The groove may be at an end portion of the bus bar in a width direction.

The flexible printed circuit and the heat transfer member may be sequentially positioned on the first surface of the bus bar, the heat transfer material may be filled in the groove from a side of the second surface of the bus bar, and an end portion of the heat transfer material may coincide with an end portion of the groove.

A maximum value of an operating temperature of the battery cells may be 60 °C, and a maximum value of an operating temperature of the bus bar may be 100 °C.

The heat transfer material may be a thermal adhesive that is curable at room temperature and has a minimum value of thermal conductivity of 1.5 (W/m°K).

The heat transfer material may be a thermal adhesive that is usable at a maximum temperature of 150 °C.

The rechargeable battery module of an embodiment may further include a top cover positioned on the bus bar and coupled to the bus bar holder.

A first gap may separate the first surface of the bus bar from a surface (upper surface) of the bus bar holder.

A second gap may separate the second surface of the bus bar from a surface (lower surface) of the top cover.

The rechargeable battery module may have double-sided adhesive tape attaching the flexible printed circuit to the bus bar, and the double-sided adhesive tape may comprise a heat-resistant tape (e.g., 150 °C) having a 50% margin at a highest temperature (e.g., 100 °C) of the bus bar.

The surface of the bus bar, on the side of the groove, may be separated from an outer side of the temperature sensor by a distance of 2 mm to 3 mm.

An embodiment provides a device comprising:
a support configured to hold a plurality of battery cells;
a bus bar held by the support and comprising a surface and a groove extending into the bus bar in a first direction, the bus bar configured to output a voltage of the plurality of battery cells;
a temperature sensor inserted into the groove and configured to detect a temperature of the bus bar;
heat conductive material located within the groove and in contact with the bus bar and the temperature sensor to transfer heat from the bus bar to the temperature sensor;
a heat conductive member configured to transfer heat from the bus bar to the temperature sensor; and
a flexible printed circuit attached to the surface of the bus bar and comprising a first surface with the temperature sensor mounted thereon and a second surface with the member attached thereto, the flexible printed circuit being configured to output a signal indicating the temperature of the bus bar detected by the temperature sensor.

At least some of the above and other features of the invention are set out in the claims.

In the rechargeable battery module according to an embodiment, by inserting a temperature sensor, mounted on a flexible printed circuit (FPC), into a groove of a bus bar, the temperature sensor may be effectively attached to the bus bar even if available spaces above and below the bus bar are narrow. Since the temperature sensor is positioned within the bus bar, in a direction of thickness of the bus bar, a temperature rise of the bus bar may be sufficiently detected within a limited deviation.

### BRIEF DESCRIPTION OF THE DRAWINGS

FIG. 1 illustrates a partial cross-sectional view of a rechargeable battery module according to a first embodiment of the present disclosure.
FIG. 2 illustrates a perspective view showing a bus bar, a flexible printed circuit, and a temperature sensor of FIG. 1.
FIG. 3 illustrates a cross-sectional view taken along a line III-III of FIG. 2.
FIG. 4 illustrates a cross-sectional view taken along a line IV-IV of FIG. 2.
FIG. 5 illustrates an exploded perspective view showing a bus bar, a flexible printed circuit, and a temperature sensor of FIG. 1.
FIG. 6 illustrates an exploded perspective view showing a double-sided tape, a flexible printed circuit, and an aluminium plate of FIG. 5.

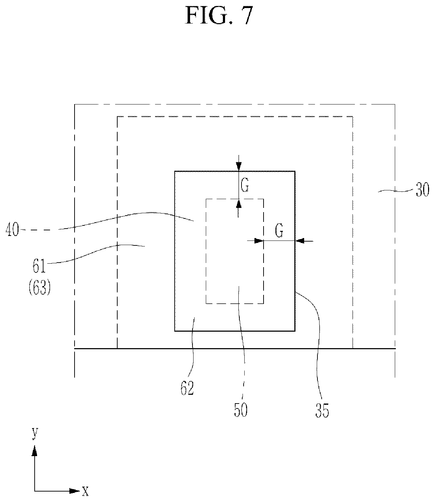

FIG. 7 illustrates a top plan view showing a bus bar, a flexible printed circuit, and a temperature sensor of FIG. 1.
FIG. 8 illustrates a cross-sectional view of a rechargeable battery module according to a second embodiment of the present disclosure.
FIG. 9 illustrates a cross-sectional view of a rechargeable battery module according to a third embodiment of the present disclosure.
FIG. 10 illustrates a perspective view showing a bus bar, a flexible printed circuit, and a temperature sensor in a rechargeable battery module according to a fourth embodiment of the present disclosure.
FIG. 11 illustrates an exploded perspective view showing a bus bar, a flexible printed circuit, and a temperature sensor of FIG. 10.
FIG. 12 illustrates a cross-sectional viewtaken along a line XII-XII of FIG. 10.

### DETAILED DESCRIPTION

Hereinafter, the present disclosure will be described more fully with reference to the accompanying drawings, in which embodiments of the disclosure are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

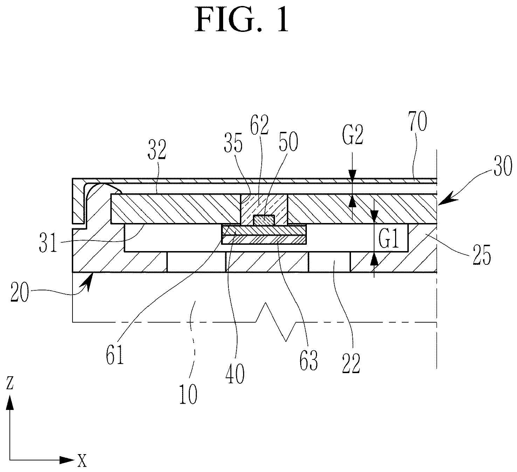

FIG. 1 illustrates a partial cross-sectional view of a rechargeable battery module according to a first embodiment of the present disclosure. Referring to FIG. 1, the rechargeable battery module according to first embodiment includes a plurality of battery cells 10 formed of rechargeable batteries, a bus bar holder 20, a bus bar 30, and a flexible printed circuit (FPC) 40.

The rechargeable battery module according to an embodiment may include multiple module frames of various structures, but a detailed description of such configurations will be omitted, and an example thereof will be described. The battery cells 10 are formed as rechargeable batteries, and are stacked in a first direction (x-axis direction).

A pair of end plates are positioned at opposite ends of the stacked battery cells 10 in the first direction to restrain the battery cells 10 in the first direction (x-axis direction). A pair of side plates are positioned at opposite sides of the battery cells 10 crossing each other in the first direction in a second direction (y-axis direction) to be connected to the pair of end plates to restrain of the battery cells 10 in the second direction.

The battery cells 10 may be positioned in one row or two rows. If positioned in two rows, a center plate may be further positioned between the pair of side plates. A center plate positioned between the two rows of battery cells 10 in the first direction restrains the battery cells 10 at opposite sides in the second direction.

The bus bar holder 20 includes a bus bar support 25 for connecting to and insulating electrode terminals (not illustrated) of the battery cells 10, and a vent unit 22 for discharging a gas vented from the battery cells 10.

The bus bar support 25 exposes the electrode terminals in a third direction (battery cell height, z-axis direction) and covers other portions of the battery cells 10 while supporting a bus bar (not illustrated), the bus bar connecting electrode terminals in series or parallel. The third direction (battery cell height, z-axis direction) intersects the first direction (battery cell thickness, x-axis direction) and the second direction (battery cell length, y-axis direction).

In the first embodiment, the bus bar 30 outputs a high voltage across the entire rechargeable battery module. Herein, the bus bar support 25 is formed in a structure, in which the bus bar 30 outputting a voltage may be positioned, to support the bus bar 30.

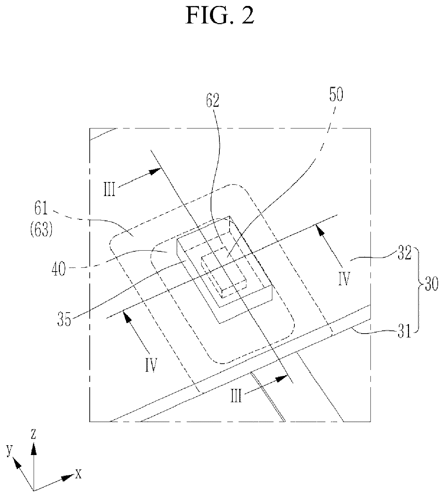

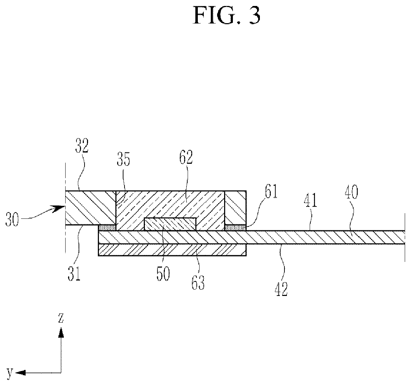

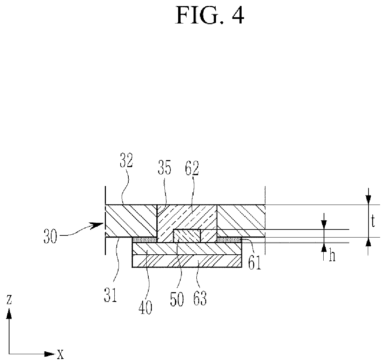

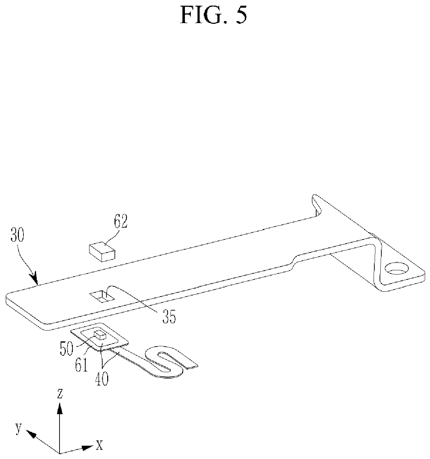

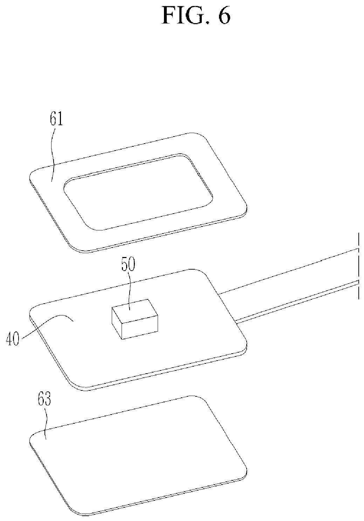

FIG. 2 illustrates a perspective view showing a bus bar, a flexible printed circuit, and a temperature sensor of FIG. 1, FIG. 3 illustrates a cross-sectional view taken along a line III-III of FIG. 2, FIG. 4 illustrates a cross-sectional view taken along a line IV-IV of FIG. 2, FIG. 5 illustrates an exploded perspective view showing a bus bar, a flexible printed circuit, and a temperature sensor of FIG. 1, and FIG. 6 illustrates an exploded perspective view showing a double-sided tape, a flexible printed circuit, and an aluminium plate of FIG. 5.

Referring to FIG. 1 to FIG. 6, the bus bar 30 has a groove 35 extending into the bus bar 30 in a thickness direction. In the first embodiment, the groove 35 is formed as a hole extending therethrough in a height direction (z-axis direction) of the bus bar 30, located entirely within a width of the bus bar 30 in a width direction (y-axis direction).

Specifically, the bus bar 30 has opposite sides, and has a first surface 31 at a lower side and a second surface 32 at an upper side, and outputs a voltage of the battery cells 10 outside of the rechargeable battery module.

The flexible printed circuit 40 has a temperature sensor 50 mounted thereto and is attached to the bus bar 30 to sense a temperature of the bus bar 30. As an example, the temperature sensor 50 may be formed of a thermistor having a negative temperature coefficient (NTC).

As an example, the flexible printed circuit 40 may be attached to the bus bar 30 with a double-sided adhesive tape 61. The flexible printed circuit 40 is attached to either one of a first surface 31 or a second surface 32 of the bus bar 30, is configured to send a signal indicating a temperature of the bus bar 30 detected by the temperature sensor 50, and is electrically connected to the temperature sensor 50 through a solder pad (not illustrated).

The temperature sensor 50 is mounted on a first surface 41 of the flexible printed circuit 40 for inserting into the groove 35. Since the temperature sensor 50 is installed by insertion into the groove 35 of the bus bar 30, space required for components to detect a temperature of the bus bar 30, in addition to a thickness t of the bus bar 30, is minimized.

That is, a height h of the temperature sensor 50, which is to be inserted into the groove 35 and buried, is set to be smaller than the thickness t of the bus bar 30 (see FIG. 4), so no portion of the temperature sensor 50 protrudes outside of the thickness t of the bus bar 30.

In the first embodiment, a heat transfer material 62 and a heat transfer member 63 are further included in order to detect the temperature of the bus bar 30 by installing the temperature sensor 50 in the groove 35 of the bus bar 30.

The heat transfer material 62 is provided between a surface of the bus bar 30, on a side of the groove 35, and the temperature sensor 50 to allow the bus bar 30 to transfer heat from the surface on the side of the groove 35 to the temperature sensor 50. That is, the heat transfer material 62 transfers the heat of the bus bar 30 to a side of the temperature sensor 50 in directions parallel to a plane (xy plane) of the bus bar 30. As an example, the heat transfer material 62 may be formed of liquid or solid thermal glue. As such, the heat transfer material 62 forms a first heat transfer path between the bus bar 30 and the temperature sensor 50.

As an example, a gap G between the surface of the bus bar 30 on the side of the groove 35 and an outer side of the temperature sensor 50 may be 2 mm to 3 mm. If the gap G is smaller than 2 mm, if the temperature sensor 50 is inserted into the groove 35, a boundary of the bus bar at the groove 35 may interfere with the solder pad that mounts the temperature sensor 50 on the flexible printed circuit 40. If the gap G is greater than 3 mm, a distance between the groove 35 and the temperature sensor 50 is too large, so that a heat transfer effect from the surface of the bus bar on the side of the groove 35 to the temperature sensor 50 may decrease.

The heat transfer member 63 is attached to the second surface 42 of the flexible printed circuit 40 to transfer the heat of the bus bar 30 to the temperature sensor 50. As an example, the heat transfer member 63 may be attached to the second surface 42 of the flexible printed circuit 40 using a double-sided adhesive tape. Since the double-sided adhesive tape may be formed in a same way as that of the heat transfer member 63, its additional description will be omitted. The heat transfer member 63 receives heat from the bus bar 30 in the thickness direction (z-axis direction) of the bus bar 30 and transfers it to the lower surface of the temperature sensor 50.

In this case, the heat of the bus bar 30 is transferred to the heat transfer member 63 through the flexible printed circuit 40, and is transferred from the heat transfer member 63 in directions parallel to the plane (xy plane) of the bus bar, and then is transferred to the temperature sensor 50 through the flexible printed circuit 40. As an example, the heat transfer member 63 may be formed of an aluminium plate. As such, the heat transfer member 63 forms a second heat transfer path between the bus bar 30 and the temperature sensor 50.

As an example, the heat transfer member 63 may have a thickness of 0.3 mm to 0.5 mm. If the thickness of the heat transfer member 63 is smaller than 0.3 mm, it is too thin, and may be bent during handling, and if it exceeds 0.5 mm, a problem may occur due to a height thereof. That is, excessive thickness of the heat transfer member 63 increases the height outside the thickness of the bus bar 30. Accordingly, the excessive thickness of the heat transfer member 63 may increase a required value of the first gap G1 or a second gap G2 described later.

As such, the heat of the bus bar 30 is three-dimensionally transferred to the temperature sensor 50 by a first transfer path in directions parallel to the plane (xy plane) of the bus bar 30 and a second transfer path in the thickness direction (z-axis direction). Accordingly, the temperature sensor 50 may detect a temperature rise of the bus bar 30 even within a required limited deviation range (e.g., within 3 °C).

The heat transfer member 63 may be formed with a same area as that of the flexible printed circuit 40 at a portion of the flexible printed circuit 40 where the temperature sensor 50 is mounted (see FIG. 3, FIG. 4, and FIG. 6). In this case, heat is absorbed by the heat transfer member 63 from an area of the flexible printed circuit 40 where the temperature sensor 50 is mounted, at a portion of the flexible printed circuit 40 proximate to the bus bar 30, to be transferred to a portion of the flexible printed circuit 40 proximate to a lower surface of the temperature sensor 50.

In addition, the heat transfer member 63 transfers heat to a portion of the flexible printed circuit 40 between an outer surface of the temperature sensor 50 and an interior of the groove 35. The transferred heat may be further transferred to a side surface of the temperature sensor 50 through the heat transfer material 62.

Meanwhile, the flexible printed circuit 40 and the heat transfer member 63 are sequentially positioned on the first surface 31 of the bus bar 30. In this case, the heat transfer material 62 may be filled in the groove 35, between the surface of the bus bar 30, on the side of the groove 35, and the temperature sensor 50, from a side of the second surface 32 of the bus bar 30.

As an example, a maximum value of an operating temperature of the battery cells 10 is 60 °C, and may be 30 °C to 60 °C. In this case, a maximum value of an operating temperature of the bus bar 30 is 100 °C, and may be 50 °C to 100 °C. In this case, the heat transfer material 62 may be a thermal adhesive that is curable at room temperature and has a minimum value of thermal conductivity of 1.5 (W/m°K).

The heat transfer material 62 may be a thermal adhesive that can be used at a maximum temperature of 150 °C so that heat can be transferred even if a maximum operating temperature of the bus bar 30 is 100 °C. In addition, the heat transfer material 62 may be a thermal adhesive usable at a temperature of 75 °C to 150 °C.

The double-sided adhesive tape 61 may be formed of a heat-resistant tape having a 50% margin for safety, considering that the maximum value of the operating temperature of the bus bar 30 is 100 °C. That is, the double-sided adhesive tape 61 may be formed as a heat-resistant tape usable at 75 °C to 150 °C.

The rechargeable battery module of the first embodiment may further include a top cover 70. The top cover 70 is positioned on the bus bar 30 to be coupled to the bus bar holder 20 from outside while covering a plurality of bus bars (not illustrated) and the bus bar holder 20.

A first gap G1 is set between the first surface 31 of the bus bar 30 and a corresponding surface (upper surface) 21 of the bus bar holder 20. As an example, the first gap G1 is 0.5 mm, and may be 0.3 mm to 0.7 mm. In addition, a second gap G2 is set between the second surface 32 of the bus bar 30 and a corresponding surface (lower surface) 71 of the bus bar holder 70. The second gap G2 may be larger than the first gap G1. As an example, the second gap G2 may be 1.3 mm, and may be 1.0 mm to 1.5 mm.

In the first embodiment, the groove 35 of the bus bar 30, the heat transfer material 62, and the heat transfer member 63 minimize additionally required space, even though the space between the first gap G1 and the second gap G2 is narrow, and thus the temperature sensor 50 may be directly installed on the bus bar 30 to directly sense the temperature of the bus bar 30.

Hereinafter, various embodiments of the present disclosure will be described. Compared to the first embodiment and the previously described embodiments, descriptions of the same components will be omitted, and descriptions of different components will be described.

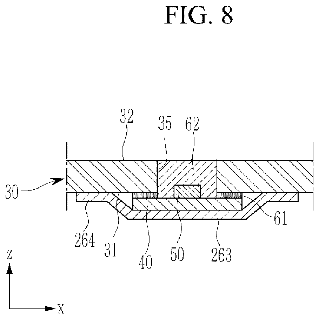

FIG. 8 illustrates a cross-sectional view of a rechargeable battery module according to a second embodiment of the present disclosure. Referring to FIG. 8, in the rechargeable battery module of the second embodiment, a heat transfer member 263 is formed with an area larger than that of the flexible printed circuit 40 at a portion of the flexible printed circuit 40 where the temperature sensor 50 is mounted.

The heat transfer member 263 further includes an extension 264 provided outside the area of the flexible printed circuit 40. The extension 264 may be provided outside the area of the flexible printed circuit 40, and may be directly attached to the first surface 31 of the bus bar 30 to receive heat from the bus bar 30 and further transfer it to the temperature sensor 50.

The heat transfer member 263 is attached to the second surface 42 of the flexible printed circuit 40, and the extension 264 is attached to the first surface 31 of the bus bar 30. Accordingly, the heat transfer member 263 and the extension part 264 increase the heat absorbing area of the bus bar 30 compared to the first embodiment without the extension 264.

The heat transfer member 263 receives heat from the bus bar 30 in the thickness direction (z-axis direction) of the bus bar 30 and transfers it to the lower surface of the temperature sensor 50. That is, the heat of the bus bar 30 is transferred to the heat transfer member 263 through the flexible printed circuit 40 and is transferred to the extension 264, then is transferred in directions parallel to the plane of the bus bar 30 (xy plane) from the heat transfer member 263 and the extension 264, and again, is transmitted to the temperature sensor 50 through the flexible printed circuit 40. As an example, the heat transfer member 263 and the extension 264 may be formed of an aluminium plate.

According to the second embodiment, compared to the first embodiment, the heat of the bus bar 30 may be transferred to the temperature sensor 50 more quickly as much as the heat of the bus bar 30 is directly transferred to the extension 264 of the heat transfer member 263 without passing through the flexible printed circuit 40. Accordingly, the temperature sensor 50 may more effectively detect the temperature rise of the bus bar 30 within a required limited deviation range (e.g., within 3 °C) than in the first embodiment.

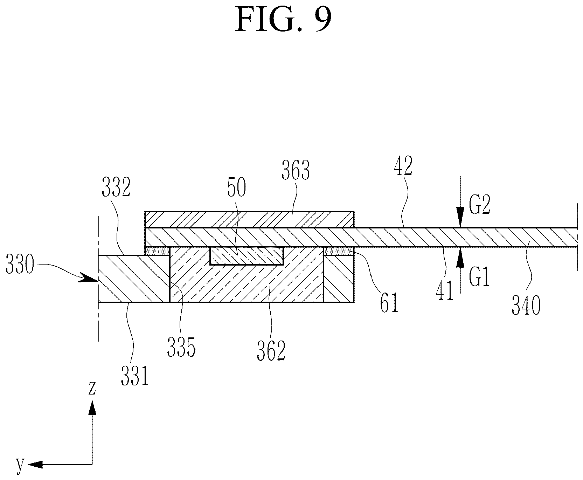

FIG. 9 illustrates a cross-sectional view of a rechargeable battery module according to a third embodiment of the present disclosure. Referring to FIG. 9, in the rechargeable battery module according to the third embodiment, a flexible printed circuit 340 and a heat transfer member 363 are sequentially positioned on a second surface 332 of a bus bar 330. In this case, a heat transfer material 362 may be filled in a groove 335, between a surface of the bus bar 330, on a side of the groove 335, and the temperature sensor 50, from a side of a first surface 331 of the bus bar 330.

In the first embodiment, the flexible printed circuit 40 and the heat transfer member 63 are provided on the first surface 31 of the bus bar 30 within the first gap

G1. In contrast, in the third embodiment, the flexible printed circuit 340 and the heat transfer member 363 are provided on the second surface 332 of the bus bar 330 within the second gap G2. According to the third embodiment, it is possible to provide an effective installation space if the second gap G2 is larger than the first gap G1.

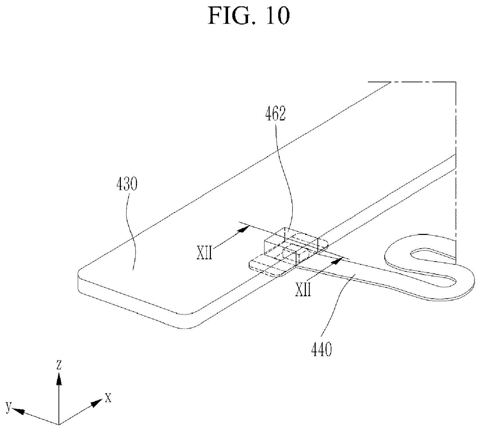

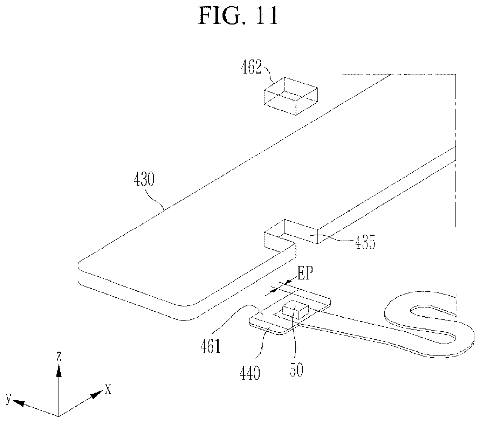

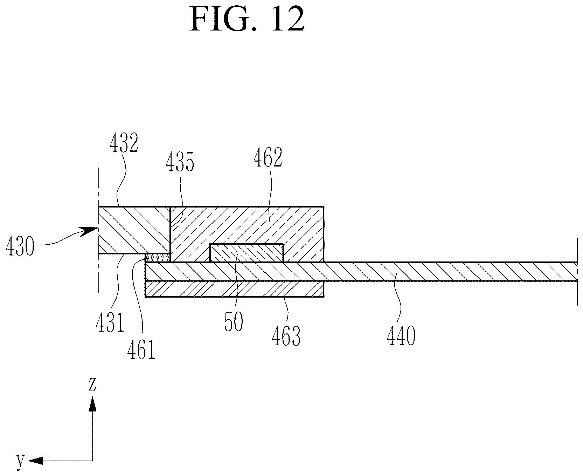

FIG. 10 illustrates a perspective view showing a bus bar, a flexible printed circuit, and a temperature sensor in a rechargeable battery module according to a fourth embodiment of the present disclosure, FIG. 11 illustrates an exploded perspective view showing a bus bar, a flexible printed circuit, and a temperature sensor of FIG. 10, and FIG. 12 illustrates a cross-sectional view taken along a line XII-XII of FIG. 10.

Referring to FIG. 10 to FIG. 12, in the rechargeable battery module of the fourth embodiment, a groove 435 is formed at a first end of a bus bar 430 in the width direction. A flexible printed circuit 440 and a heat transfer member 463 are sequentially positioned on a first surface 431 of the bus bar 430. In this case, a heat transfer material 462 may be filled in the groove 435, between a surface of the bus bar 430, on a side of the groove 435, and the temperature sensor 50, from a side of a second surface 432 of the bus bar 430, and an end portion of the heat transfer material 462 coincides with an end portion of the groove 435. Since the groove 435 is open at a first side of the bus bar 430 in the width direction, installation of the flexible printed circuit 440 and the heat transfer member 463 may be easier than in the first embodiment.

The flexible printed circuit 440 and the heat transfer member 463 may further have extended parts EP more than the flexible printed circuit 40 and the heat transfer member 63 of the first embodiment at opposite sides of the bus bar 430 in the length direction (x-axis direction). A double-sided adhesive tape 461 is formed in a structure in which one side is open, to correspond to one side open in the groove 435, as compared to the quadrangular band structure of the double-sided adhesive tape 61 of the first embodiment.

The extended parts EP from the flexible printed circuit 440 and the heat transfer member 463 increase an area where heat can be transferred between the bus bar 430 and the temperature sensor 50 by increasing a portion receiving heat from the bus bar 430. The groove 435 having one side open transfers heat to three sides of the temperature sensor 50, and thus compared to the first embodiment in which heat is transferred to four sides, the heat transferred to the temperature sensor 50 can be insufficient, but the extended parts EP may compensate for this possible lack of heat transfer.

That is, the heat of the bus bar 30 is transferred to the heat transfer member 463 through the flexible printed circuit 440, and is transferred from the heat transfer member 463 in directions parallel to the plane of the bus bar 30 (xy plane), and then is transferred to the temperature sensor 50 through the flexible printed circuit 40, and in this case, this is possible because the extended parts EP, which increase the heat transfer area, further increase heat transfer.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

**<Description of Symbols>**

| | | | |
|---|---|---|---|
| 10: | battery cell | 20: | bus bar holder |
| 21: | corresponding surface (upper surface) | 22: | vent unit |
| 25: | bus bar support | 30: | bus bar |
| 31: | first surface | 32: | second surface |
| 35: | groove | 40, 440: | flexible printed circuit (FPC) |
| 41: | first surface | 42: | second surface |
| 50: | temperature sensor (NTC) | 61, 461: | double-sided adhesive tape |
| 62: | heat transfer material | 63: | heat transfer member |
| 70: | top cover | 71: | corresponding surface (lower surface) |
| 263: | heat transfer member | 264: | extension |
| 330: | bus bar | 331: | first surface |
| 332: | second surface | 335: | groove |
| 340: | heat transfer circuit | 362, 462: | heat transfer material |
| 363: | heat transfer member | 430: | bus bar |
| 431: | first surface | 432: | second surface |
| 435: | groove | 463: | heat transfer member |
| EP: | extended part | G: | gap |
| G1: | first gap | G2: | second gap |
| h: | height | t: | thickness |

## Claims

1. A rechargeable battery module comprising:
a bus bar holder configured to cover a plurality of battery cells;
a bus bar positioned in the bus bar holder, the bus bar configured to output a voltage of the plurality of battery cells, and the bus bar having a first surface, a second surface, and a groove extending into the bus bar in a thickness direction;
a flexible printed circuit attached to one of the first and second surfaces of the bus bar, the flexible printed circuit comprising a first surface and a second surface, and the flexible printed circuit being configured to send a signal indicating a temperature of the bus bar;
a temperature sensor mounted on the first surface of the flexible printed circuit, inserted into the groove, and configured to detect the temperature of the bus bar;
a heat transfer material between a surface of the bus bar, on a side of the groove, and the temperature sensor and configured to transfer heat from the surface of the bus bar, on the side of the groove, to the temperature sensor; and
a heat transfer member attached to the second surface of the flexible printed circuit and configured to transfer heat from the bus bar to the temperature sensor.

2. The rechargeable battery module of claim 1, wherein the groove is located entirely within a width, in a width direction, of the bus bar.

3. The rechargeable battery module of claim 1 or claim 2, wherein the heat transfer material is thermal glue.

4. The rechargeable battery module of any one of claims 1 to 3, wherein the heat transfer member comprises an aluminium plate.

5. The rechargeable battery module of claim 4, wherein the heat transfer member has a thickness of 0.3 mm to 0.5 mm in the thickness direction.

6. The rechargeable battery module of any one of claims 1 to 5, wherein the heat transfer member has an area that is equal to an area of a portion of the flexible printed circuit on which the temperature sensor is mounted.

7. The rechargeable battery module of any one of claims 1 to 5, wherein the heat transfer member has an area that is larger than an area of a portion of the flexible printed circuit on which the temperature sensor is mounted, such that the heat transfer member is in direct contact with a surface of the bus bar.

8. The rechargeable battery module of any one of claims 1 to 7, wherein the flexible printed circuit and the heat transfer member are sequentially positioned on the first surface of the bus bar, and the heat transfer material is filled in the groove from a side of the second surface of the bus bar.

9. The rechargeable battery module of any one of claims 1 to 7, wherein the flexible printed circuit and the heat transfer member are sequentially positioned on the second surface of the bus bar, and the heat transfer material is filled in the groove from a side of the first surface of the bus bar.

10. The rechargeable battery module of claim 1, wherein the groove is at an end portion of the bus bar in a width direction, optionally wherein the flexible printed circuit and the heat transfer member are sequentially positioned on the first surface of the bus bar, the heat transfer material is filled in the groove from a side of the second surface of the bus bar and an end portion of the heat transfer material coincides with an end portion of the groove.

11. The rechargeable battery module of any one of claims 1 to 10, wherein a maximum value of an operating temperature of the battery cells is 60 °C, and a maximum value of an operating temperature of the bus bar is 100 °C.

12. The rechargeable battery module of claim 11, wherein:
(i) the heat transfer material is curable at room temperature, and is a thermal adhesive having thermal conductivity; and/or
(ii) the heat transfer material is a thermal adhesive that is usable at a maximum temperature of 150 °C.

13. The rechargeable battery module of any one of claims 1 to 12, further comprising a top cover positioned on the bus bar to be coupled to the bus bar holder.

14. The rechargeable battery module of claim 13, wherein a first gap separates the first surface of the bus bar from a surface of the bus bar holder, optionally wherein a second gap separates the second surface of the bus bar from a surface of the top cover.

15. The rechargeable battery module of any one of claims 1 to 14, wherein:
(i) the rechargeable battery further comprises double-sided adhesive tape attaching the flexible printed circuit to the bus bar, wherein the double-sided adhesive tape comprises a heat-resistant tape having a 50% margin at a highest temperature of the bus bar; and/or
(ii) the surface of the bus bar, on the side of the groove, is separated from an outer side of the temperature sensor by a distance of 2 mm to 3 mm.
